# EUROPEAN PATENT APPLICATION

(11) **EP 4 793 837 A1**
(43) Date of publication of application: **19.08.2026**
(21) Application number: 25158607.9
(22) Date of filing: 18.02.2025
(51) Int. Cl.: G06N 10/40, G06N 10/20

(54) **NARROWBAND TUNABLE COUPLER FOR SUPERCONDUCTING QUANTUM CIRCUITS**

(71) Applicant: Karlsruher Institut für Technologie, Körperschaft des öffentlichen Rechts, 76131 Karlsruhe (DE)
(72) Inventor: POP, Ioan M., 76133 Karlsruhe (DE); GEISERT, Simon, 75334 Straubenhardt (DE); IHSSEN, Sören, 76131 Karlsruhe (DE); WERNSDORFER, Wolfgang, 76137 Karlsruhe (DE)
(74) Representative: Müller-Boré & Partner Patentanwälte PartG mbB

(57) **Abstract**

Summarizing the invention, a method for indirectly coupling a first superconducting quantum circuit and a second superconducting quantum circuit is provided. The method comprises: providing the first superconducting quantum circuit and the second superconducting quantum circuit such that the first superconducting quantum circuit and the second superconducting quantum circuit are electromagnetically isolated from each other; electromagnetically coupling a coupler circuit to the first superconducting quantum circuit and to the second superconducting quantum circuit, wherein the first superconducting quantum circuit and the second superconducting quantum circuit are coupled to the coupler circuit with equal strength; setting a resonance frequency of the first superconducting quantum circuit to a common frequency; setting a resonance frequency of the second superconducting quantum circuit to the common frequency; applying an oscillating signal that makes a resonance frequency of the coupler circuit cyclically change such that the resonance frequency of the coupler circuit is equal to the common frequency at a plurality of timepoints, wherein an amplitude, a length and a frequency of the oscillating signal are set such that a first qubit state of the first superconducting quantum circuit and a second qubit state of the second superconducting quantum circuit swap.

## Description

### Technical Field

The following description relates to quantum information processing hardware, in particular to couplers for superconducting quantum circuits.

### Background

The basic unit of quantum information is a quantum bit or qubit, which can have various physical implementations, e.g. in the form of a superconducting quantum circuit, such as a flux qubit. In order to perform quantum algorithms, quantum gates acting on the qubits are used, which require a coupling between the respective superconducting quantum circuits. More specifically, the superconducting quantum circuits should be decoupled from each other for most of the time, and the coupling should be switched on only for quantum gate operations. Accordingly, tunable couplers, i.e. circuits that can turn the coupling between two or more superconducting quantum circuits on and off, are conventionally used. One issue of tunable couplers is cross-talk for larger numbers of qubits, which limits scalability. Indeed, the presence of several qubit-coupler-qubit systems on the same signal line may cause cross-talk between the tunable couplers, which will activate unwanted qubit-qubit couplings.

### Summary

It is an object of the invention to provide a tunable coupler for coupling two superconducting quantum circuits that mitigates the problem of cross-talk with other tunable couplers and/or with other superconducting quantum circuits.

The achievement of this object in accordance with the invention is set out in the independent claims. Further developments of the invention are the subject matter of the dependent claims.

According to one aspect, a method for indirectly coupling a first superconducting quantum circuit and a second superconducting quantum circuit is provided. The method comprises:
- providing the first superconducting quantum circuit and the second superconducting quantum circuit such that the first superconducting quantum circuit and the second superconducting quantum circuit are electromagnetically isolated from each other;
- electromagnetically coupling a coupler circuit to the first superconducting quantum circuit and to the second superconducting quantum circuit, wherein the first superconducting quantum circuit and the second superconducting quantum circuit are coupled to the coupler circuit with equal strength;
- setting a resonance frequency of the first superconducting quantum circuit to a common frequency;
- setting a resonance frequency of the second superconducting quantum circuit to the common frequency;
- applying an oscillating signal that makes a resonance frequency of the coupler circuit cyclically change such that the resonance frequency of the coupler circuit is equal to the common frequency at a plurality of timepoints, wherein an amplitude, a length and a frequency of the oscillating signal are set such that a first qubit state of the first superconducting quantum circuit and a second qubit state of the second superconducting quantum circuit swap.

A superconducting quantum circuit is a circuit that allows storage of quantum information in the form of a qubit state as well as a measurement or readout of the qubit state. A qubit is a two-level quantum-mechanical system, whose state |*x*〉 can be written as a superposition of the eigenstates 10) and 11), which can be expressed as follows using the Bloch sphere representation: $\left.\left|x\right.\right〉 = cos \frac{θ}{2} \left.\left|0\right.\right〉 + {e}^{iφ} sin \frac{θ}{2} \left.\left|1\right.\right〉$ with $θ , φ ∈ ℝ$.

Accordingly, a superconducting quantum circuit may be considered as the result of the coupling between (1) a qubit circuit that realises the two-level quantum-mechanical system and that can be subjected to quantum computational operations that modify its state and (2) a readout circuit that enables to determine the qubit state.

A resonance frequency of the readout circuit is modified in virtue of its coupling to the qubit circuit, specifically the readout circuit has a first resonance frequency if the qubit state is the ground state and a second resonance frequency if the qubit state is the (first) excited state. The difference between the first resonance frequency and the second resonance frequency is referred to as dispersive shift. Accordingly, by determining the resonance frequency of the readout circuit, it is possible to determine the qubit state.

The quantum circuit is superconducting in that all components of the superconducting quantum circuit are superconducting. In particular, the components of the superconducting quantum circuit may exhibit superconductive behaviour at the operating temperature of the superconducting quantum circuit. Exemplarily, the operating temperature is 4 K or less, more preferably 10 mK or less. The lower limit is not particularly limited and may be 5 mK for instance.

Exemplarily, both the first and second superconducting quantum circuits may be flux qubits.

Each superconducting quantum circuit may comprise a nonlinear element and a plurality of sections of wiring, some of which may be arranged to form specific elements, such as loops, capacitive elements, pads. The nonlinear element is an electrical component that enables a flow of current through it and exhibits two properties, non-dissipation and nonlinearity. For instance, the nonlinear element may be a Josephson junction comprising two superconductors connected by a weak link, i.e., a non-superconducting portion, such as a thin insulating layer or non-superconducting metal. For instance, the superconductors may be made of aluminium and the non-superconducting material may be an aluminium oxide. The sections of wiring are made of one or more superconductive materials, such as superconductive metals (e.g. aluminium and/or granular aluminium).

Each superconducting quantum circuit may be formed on a substrate, e.g. by means of metal deposition. Examples of suitable materials for the substrate include silicon, silicon carbide, germanium, silicon germanium, silicon-germanium-carbon, Si alloys, Ge alloys, III-V materials such as gallium arsenide, indium phosphide, aluminium arsenide, and indium arsenide, II-VI materials such as cadmium selenide, cadmium sulfide, cadmium telluride, zinc oxide, zinc selenide, zinc sulfide, and zinc telluride, sapphire, and quartz, or any combination thereof. Preferably, the substrate is sapphire or silicon, since said substrate materials are proven to have low dielectric losses. Most preferably, the substrate is a sapphire wafer. Accordingly, the combination of a substrate and the superconducting quantum circuit, wherein the superconducting quantum circuit is formed on the substrate, may be referred to as "readout-qubit chip".

The method described herein achieves an indirect coupling between the first superconducting quantum circuit (hereinafter "first SQC") and the second superconducting quantum circuit (hereinafter "second SQC"). This means that the no direct coupling is implemented purposefully between the first SQC and the second SQC, e.g. no capacitive or inductive coupling. Instead, the coupling is mediated by the coupler circuit. However, it is noted that undesired direct coupling, such as parasitic capacitive coupling, may still be present.

The method comprises providing the first and second SQCs such that they are electromagnetically isolated from each other. Specifically, the SQCs may be screened from microwave radiation. In this context, the presence of electromagnetic isolation between the first SQC and the second SQC may mean that the isolation is greater than a specific threshold. For instance, if the isolation is measured in decibel, the method may comprise providing an isolation (e.g. a microwave isolation) of at least 50 dB, for example of 70 dB.

This electromagnetic insulation may be implemented in a plurality of different ways that isolate the circuits from each other. In one example, inductive pillars may separate the circuit parts. In another example, the method may comprise positioning the first SQC in a first enclosure and the second SQC in a second enclosure, wherein the first enclosure and the second enclosure electromagnetically isolate the first superconducting quantum circuit and the second superconducting quantum circuit, respectively. The following description will focus on the example with the enclosures, however it should not be considered limiting.

Each enclosure comprises a volume of space that is electromagnetically isolated from other volumes of space of other enclosures. An enclosure may be substantially enclosed on all sides, wherein here "substantially" means that the enclosure may comprise one or more apertures. For example, at least one of the sides of the enclosure may comprise a gap through which a substrate onto which an SQC is formed passes (as in the readout-qubit chip described above), wherein the gap is such that there remains an aperture between the side of the enclosure and the substrate, so that the SQC does not contact the (side of the) enclosure. If the greatest dimension of the aperture is called length, the length determines the largest wavelength that can pass through. The length *L* may be chosen to be considerably smaller than *c*/*F,* e.g. *L* ≤ 0.1 *c*/*F ,* wherein c is the speed of light and F is the largest operating frequency of the SQC. For instance, if the length is about 3 mm, the cutoff frequency F is roughly 100 GHz, meaning that electromagnetic waves below 100 GHz are attenuated.

Exemplarily, the first and second enclosures may be part of a structure, e.g. may be located in a container or box. The sides of each enclosure may be formed as an element of the structure or may be immovably fastened to the structure. The structure (such as the box) may comprise a base component and a lid component that can be removably fixed to each other, i.e. they may be in a state (open state) in which they are separate from each other and in a state (closed state) in which they are connected to each other, e.g. by fastening means such as screws.

Accordingly, providing the first and second SQCs in their respective enclosures may comprise positioning the first SQC and the second SQC in the base component of the container and connecting the lid component of the container to the base component, wherein the connected lid component and base component form the first enclosure and the second enclosure. More specifically, it may comprise positioning the first and second SQCs in the base component and then positioning the lid component on top of the SQCs and the base component, wherein the combination of the lid component and the base component forms the enclosures.

Thus, the lid component and the base component may have features (e.g. inner structures) that cooperate with each other to form electromagnetically insulating enclosures. In particular, the base component may comprise a bottom surface, two lateral surfaces extending substantially parallel to each other and perpendicularly to the bottom surface, and a plurality of base walls that are substantially perpendicular to both the bottom surface and the lateral surfaces. Specifically, the base component may comprise a first base wall and a second base wall, which partly form the first enclosure, and may comprise a third base wall and a fourth base wall, which partly form the second enclosure. The first SQC (in particular, a first substrate onto which the first SQC is formed) may be positioned transversally on the first and second base walls and the second SQC (in particular, a second substrate onto which the second SQC is formed) may be positioned transversally on the third and fourth base walls.

The lid component may comprise a top surface and a plurality of lid walls that are substantially perpendicular to both the top surface and the lid lateral surfaces. Specifically, the lid component may comprise a first lid wall and a second lid wall, which partly form the first enclosure, and may comprise a third lid wall and a fourth lid wall, which partly form the second enclosure. When the lid component is mounted on the base component, the top surface faces the bottom surface. In the closed state, the lateral surfaces of the base component may have an extension such that they reach at least the top surface. When the lid component is connected to the base component, it may be also placed above the first and second SQCs, in particular above the substrates onto which they are formed. As mentioned above, there may be apertures between the lid walls and the substrates. In some examples, the lid walls may be aligned with the base walls, in particular the first lid wall and first base wall may be aligned with each other, and so on.

Therefore, the first enclosure may be formed by respective portions of the bottom surface, of the top surface and the lateral surfaces, and by the first and second walls. The gaps between the base walls and the lid walls enable the insertion of the substrate of the first SQC. The gaps have only a vertical component (i.e. parallel to the walls) in an example in which the walls are aligned, or may have also a horizontal component (i.e. parallel to the top and bottom surfaces), when the walls are not aligned. The same applies for the second enclosure, which may be formed by respective portions of the bottom surface, of the top surface and the lateral surfaces, and by the third and fourth walls.

The distance between the first enclosure and the second enclosure and/or the material(s) of the enclosure may be such that the electromagnetic (in particular microwave) isolation is established between the first SQC provided in the first enclosure and the second SQC provided in the second enclosure. Exemplarily, the distance between the two enclosures (measured as distance between a centre plane of the first enclosure and a centre plane of the second enclosure) may be between about 0.8 cm and 1.6 cm, more particularly between about 1.0 cm and 1.4 cm, even more particularly about 1.2 cm. The centre plane of an enclosure may be the plane that is parallel to and equidistant from the lid walls and/or base walls.

Exemplarily, the enclosures may be at least partially made of metal, e.g. copper. For instance, the container described above may be made of metal such as copper. In particular, if the enclosures are formed by the vertical walls, bottom surface and top surface described above, the vertical walls, the bottom surface and the top surface may be made of metal such as copper.

In a particular example, the method may also comprise providing a first control circuit (e.g. in the first enclosure) and a second control circuit (e.g. in the second enclosure). A control circuit is configured to enable manipulation of a state of a superconducting quantum circuit and to enable readout of the state of the superconducting quantum circuit. A control circuit may also be formed on a substrate and the combination of a control circuit and its substrate may be referred to as "control chip".

The first control circuit may couple the first superconducting quantum circuit to a first readout port and may couple the first superconducting quantum circuit to a first flux control port; the second control circuit may couple the second superconducting quantum circuit to a second readout port and may couple the second superconducting quantum circuit to a second flux control port. In particular, each control circuit may comprise a Purcell filter resonator configured to couple the respective SQC to a readout port and a flux bias circuit configured to couple the respective SQC to a flux control port.

A relative position between the readout-qubit chip and the control chip may be such that the superconducting quantum circuit is capacitively coupled to the control circuit. In particular, the capacitive coupling has to be sufficient for the operations of the device.

Exemplarily, a first level and a second level may be defined in the first/second enclosure, the first level being separated from the second level by a separation distance, and the first/second readout-qubit chip may be positioned at the first level and the first/second control chip may be positioned at the second level. In particular, the readout-qubit chip and the control chip may be substantially parallel to each other, i.e., the separation distance may be substantially constant over the surfaces of the chips. Exemplarily, the separation distance may be between about 1 µm and about 100 µm, in particular between about 40 µm and about 60 µm, for example about 50 µm.

A surface of the first/second readout-qubit chip on which the first/second superconducting quantum circuit is formed may face a surface of the control chip on which the first/second control circuit is formed. The first level may be considered as defining a first plane, namely the plane on which the first surface lies, and the second level may be considered as defining a second plane, namely the plane on which the second surface lies. It should be noted that the facing between a surface of the readout-qubit chip (e.g. the first surface) and a surface of the control chip (e.g. the second surface) implies that a projection of the first surface onto the second plane has a non-zero overlap with the second surface (or vice versa).

The method further comprises electromagnetically coupling a coupler circuit to the first SQC as well as to the second SQC. In other words, the method comprises providing a coupler circuit and establishing a first electromagnetic coupling between the coupler circuit and the first SQC as well as establishing a second electromagnetic coupling between the coupler circuit and the second SQC.

The coupler circuit may be made of superconductive material(s). The coupler circuit may be formed on a substrate like the ones described above, which will be referred to as "third substrate". The combination of the coupler circuit and the third substrate will be referred to as "coupler chip".

Exemplarily, the coupling between the coupler circuit and the SQCs may be a capacitive coupling. For instance, a first coupling element of the coupler circuit and a first coupling component may form a first capacitor, while a second coupling element of the coupler circuit and a second coupling component may form a second capacitor. The coupling elements and coupling components are discussed in detail below.

The coupling between the coupler circuit and each of the SQCs is the same, in particular it has the same strength or magnitude. In other words, the first electromagnetic coupling is identical to the second electromagnetic coupling. As a consequence of this symmetry between the two couplings, any interaction between an SQC and the coupler circuit happens with equal probability amplitude to the other SQC as well.

For instance, in the example of capacitive coupling, the capacitance value of the first electromagnetic coupling is equal to the capacitance value of the second electromagnetic coupling. Exemplarily, the first capacitor and the second capacitor may be equally sized.

Coupling the coupler circuit to the SQCs may comprise providing the coupler circuit, e.g. in a coupler volume. The coupler volume may be a volume of space configured for accommodating the coupler circuit. The coupler circuit may be interposed between the first SQC and the second SQC and, thus, e.g. between the first enclosure and the second enclosure. Said otherwise, the coupler volume may be located between the first and second enclosures.

In a particular example, the coupler volume may be an enclosure similar to the first and second enclosures, namely the coupler circuit may be provided in a coupler enclosure, wherein the coupler enclosure electromagnetically isolates the coupler circuit. The coupler enclosure may be between the first and second enclosures. Specifically, the coupler enclosure may be adjacent to the first enclosure and the second enclosure, in that the coupler enclosure shares a side with the first enclosure and shares another side with the second enclosure. In the configuration with the container described above, also the coupler enclosure may be formed by the base component and the lid component. In particular, the coupler enclosure may be formed by respective portions of the bottom surface, of the top surface and the lateral surfaces, and by the second and third walls (i.e. the second base and lid walls as well as the third base and lid walls).

When the SQCs (and possibly also the coupler circuit) are in electromagnetically insulating enclosures, the coupling between the coupler circuit and each SQC may be realised by having a coupling portion of the coupler circuit extend in each of the first and second enclosures or by having a coupling portion connected to each SQC extend in the coupler volume, e.g. in the coupler enclosure.

A coupling portion may be a circuit element that is configured to electromagnetically couple (e.g. capacitively) with another circuit element, e.g. another coupling portion. A coupling portion may be a conductive element made of superconductive material(s). In particular, a coupling portion may be a skeletonised (or fragmented) element, which prevents flux trapping. Herein, "skeletonised" refers to a configuration of the coupling portion, among possible configurations having all the same coupling (e.g. capacitive coupling), that minimises the area covered by superconductive material to avoid flux confinement. For instance, continuous areas of superconductive material larger than 40x40 µm² are avoided. Furthermore, a skeletonised conductive element does not comprise any closed paths (or "loops").

For instance, each coupling portion may comprise wiring in the shape of: a cross structure having four bars extending from a core, wherein each bar is perpendicular to its adjacent bars, and a plurality of discontinuous circles arranged concentrically, wherein each discontinuous circle comprises four separated arcs and each arc is connected to a respective bar. A discontinuous circle is a set of circular wiring sections (the arcs) that are disconnected from each other but that are arranged along the pattern of a circle.

In the following, coupling portions comprised in the coupler circuit will be referred to as "coupling elements" and coupling portions connected to the SQCs will be referred to as "coupling components".

The coupler circuit may comprise a first coupling element and a second coupling element, wherein the first coupling element may couple to the first SQC and the second coupling element may couple to the second SQC. Exemplarily, the coupler circuit may also comprise an SQC (hereinafter referred to as "coupler SQC") having the properties described above, the coupler SQC being electrically connected to the first and second coupling elements, e.g. by means of wiring. Alternatively, the coupler circuit may comprise a linear circuit being electrically connected to the first and second coupling elements.

The first SQC may be electrically connected to a first coupling component and the second SQC may be electrically connected to a second coupling component. The connections between coupling components and respective SQC, which may be e.g. pieces of wiring, may be made of superconductive material(s).

Electromagnetically coupling the coupler circuit to the first superconducting quantum circuit and to the second superconducting quantum circuit may comprise coupling the coupler circuit to the first coupling component and the second coupling component, in particular coupling the first coupling element to the first coupling component and coupling the second coupling element to the second coupling component. Coupling the coupler circuit (in particular its coupling elements) to the coupling components may entail positioning the coupler circuit relative to the coupling components such that an electromagnetic (e.g. capacitive) coupling can be established.

For instance, the first coupling element may be positioned substantially parallel to (e.g. under or below) the first coupling component (e.g. the first qubit-readout chip and the coupler chip may be positioned substantially parallel to each other), with a first (non-zero) distance between the first coupling element and the first coupling component. Furthermore, the first coupling element and the first coupling component may be aligned. In particular, a projection of the first coupling element on the plane of the first coupling component (or vice versa) may have an area overlap with the first coupling component of at least 70%, or more particularly at least 85%, or more particularly at least 95%. The same may apply to the second coupling element and second coupling component. The degree of overlap may determine the coupling strength due to the capacitive coupling.

In some examples discussed further below, the first SQC and the second SQC may be symmetrical circuits. In these examples, each of the SQCs may be electrically connected to two respective coupling components, the two coupling components being connected on opposite sides of the SQC. Accordingly, the first SQC may be connected to the first coupling component and to a third coupling component, while the second SQC may be connected to the second coupling component and to a fourth coupling component. Similarly to the first and second coupling components, the third coupling component may be located outside the first enclosure and the fourth coupling component may be located outside the second enclosure.

In a particular example, the first coupling component may be located outside the first enclosure and the second coupling component may be located outside the second enclosure. Specifically, the first and second coupling components may be located within the coupler volume, e.g. the coupler enclosure.

Exemplarily, the first coupling component connected to the first SQC may be formed on the first substrate and the second coupling component connected to the second SQC may be formed on the second substrate. Thus, the first qubit-readout chip may comprise the first coupling component and the second qubit-readout chip may comprise the second coupling component.

Accordingly, in this example, it may be said that the method comprises positioning the first qubit-readout chip such that the first SQC is within the first enclosure and the first coupling component is outside the first enclosure. Similarly, the method may comprise positioning the second qubit-readout chip such that the second SQC is within the second enclosure and the second coupling component is outside the second enclosure. In particular, the first and second qubit-readout chips may be positioned such that the first and second coupling components are within the coupler volume, e.g. the coupler enclosure, at the first and second distance, respectively, from the coupler chip.

Referring to the first plane defined in the example of the control circuits, wherein the first and second qubit-readout chips are arranged on the first plane, it may be said that the projection of the coupler chip on the first plane overlaps with both readout-qubit chips. Exemplarily, the coupler chip may be positioned on the second plane, namely be at the same height as the first and second control chips.

Accordingly, the first enclosure may comprise a first slit in which the first qubit-readout chip can be located and the second enclosure may comprise a second slit in which the second qubit-readout chip can be located. In other words, a slit may accommodate a qubit-readout chip such that a part of the qubit-readout chip on one side of the slit is within the enclosure and a part of the qubit-readout chip on the other side of the slit is outside the enclosure. The qubit-readout chip may substantially fill the slit, so that there is only a small aperture in the enclosure, as discussed above. In cases in which each SQC is connected to two coupling components, each enclosure may comprise a pair of slits and the qubit-readout chip may protrude from two opposite sides of the respective enclosure. In the case of the container with the walls described above, the slits may correspond to the gaps between a base wall and its respective lid wall.

Thus, one dimension of the first/second substrate may be larger than a corresponding dimension of the first/second enclosure, so that the first/second substrate can protrude outside the first/second enclosure. In particular, the dimension may be the one along the direction of the connection between the SQC and the coupling component (which corresponds e.g. to the distance between two base walls, or between two slit walls, forming an enclosure as discussed above). Exemplarily, the first and second substrate may have a length of 1 cm while the corresponding dimension of the respective enclosure may be 0.6 cm. Instead, the third substrate onto which the coupler circuit is formed may be fully contained within the coupler enclosure.

The method further comprises setting the resonance frequency of the first SQC to a common frequency and setting the resonance frequency of the second SQC to the common frequency. Said otherwise, the operating frequencies of the first and second SQC are set to be equal. Therefore, the first SQC and second SQC operate in resonance with one another, i.e. at the same frequency.

Generally, the resonance frequency of an SQC can be controlled by applying a magnetic field. Exemplarily, a static magnetic field, i.e. a magnetic field that stays constant over time, may be generated in each of the first and second enclosures, e.g. by a respective magnetic field coil. For instance, the lid component described above may contain at least two coils integrated in it, one for each of the first and second enclosures. The resonance frequency may be determined by the value of the magnetic flux generated by the magnetic field through the surface of an SQC. Each resonance frequency can be tuned independently from the other. In the present case, it is chosen to tune both the first and the second SQC to the same frequency, called common frequency.

For instance, the common frequency may be chosen by selecting a specific value for the static magnetic flux applied to the first SQC, determining which resonance frequency ensues for the first SQC from said specific value and setting the common frequency to be said resonance frequency. Then, e.g. by looking at a spectrum of the second SQC or by trial, it is determined which static magnetic flux applied to the second SQC would result in the resonance frequency of the second SQC being equal to the common frequency, and the determined static magnetic flux is indeed applied to the second SQC. If there is more than one value of static magnetic flux that, applied to the second SQC, would result in the common frequency (e.g. if the spectrum of the second SQC is parabolic), the highest among the possible values may be chosen. The roles of the first and second SQCs may be reversed.

The specific value for the static magnetic flux applied to the first SQC may be one half of the flux quantum ${Φ}_{0} = \frac{h}{2 e} = 2.07 ⋅ {10}^{- 15}$ Wb. The frequency of the first SQC resulting from this applied magnetic flux may be referred to as "half-flux frequency" of the first SQC.

In other examples, the common frequency may be chosen *a priori* and then the corresponding magnetic fluxes to be applied to the first and second SQCs may be determined.

An SQC may be seen as an electromagnetic resonator with a resonance frequency ω₀₁ = (E₁ - E₀)/ 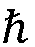 , set by the energy difference between the qubit ground state and the qubit (first) excited state. This resonance frequency is tunable via the applied flux.

The method further comprises applying an oscillating signal that makes the resonance frequency of the coupler circuit cyclically change such that the resonance frequency of the coupler circuit is equal to the common frequency at a plurality of timepoints. In other words, the method comprises moving the resonance frequency of the coupler circuit from being off-resonant (i.e. different from the common frequency) to being on-resonant (i.e. equal to the common frequency) with the first and second SQCs and then to being off-resonant again multiple times. In particular, the resonance frequency may be changed from a minimum resonance frequency to a maximum resonance frequency and from the maximum resonance frequency to the minimum resonance frequency in cycles, wherein the common frequency is comprised between the minimum resonance frequency and the maximum resonance frequency. A cycle time, i.e. the time interval between two subsequent timepoints at which the resonance frequency is the same, may be in the order of few nanonseconds, e.g. 5 ns. The number of timepoints may be between 2 and 200, e.g. 40.

Accordingly, the coupler circuit is configured to be tunable in its resonance frequency. Exemplarily, in the case in which the coupler circuit comprises the coupler SQC, the resonance frequency of the coupler circuit may be tuned by applying a time-dependent magnetic field, i.e. a magnetic field that varies with time. For instance, a coil (e.g. made of superconducting material in the form of a wire) may be formed on the third substrate and an oscillating voltage may be applied to the coil to generate an oscillating current, which in turn generates the time-dependent (in particular, oscillating) magnetic field. As a result, there is a time-dependent magnetic flux threading the coupler SQC and, thus, changing its resonance frequency. Accordingly, in this example, the oscillating signal that makes the resonance frequency of the coupler circuit cyclically change may be a voltage signal. The distance between the coil and the coupler SQC may be lower than a predetermined threshold (e.g. 0.5 mm) in order to allow sufficient mutual inductance. In other examples, a magnetic hose may be used.

Exemplarily, the resonance frequency of the coupler circuit may be given by the sum of a fixed component and a variable component, wherein the latter may have a varying value and a varying sign (i.e. may switch back and forth from negative to positive). The fixed component may be determined by an applied static magnetic field (e.g. the lid component may comprise a third coil integrated in it) and/or a DC offset voltage may be applied to the flux bias line (on the same line as the variable signal) and the variable component may be determined by the time-dependent magnetic field.

Exemplarily, the resonance frequency of the coupler circuit may be tuned by several GHz, e.g. from 3.5 GHz to 10.5 GHz.

As explained above, the first and second SQCs are tuned with each other, i.e. they are at the same common frequency. Thus, the eigenstates of the Hamiltonian of the quantum system comprising the first and the second SQCs are the even and odd superposition of the individual qubit states, which are referred to as even mode and odd mode, respectively, in the following. If |*ψ*₁〉 is the qubit state of the first SQC and |*ψ*₂〉 is the qubit state of the second SQC, the even mode is given by $\left.\left|{ψ}_{+}\right.\right〉 = \frac{1}{\sqrt{2}} \left(\left.\left|{ψ}_{1}\right.\right〉+\left.\left|{ψ}_{2}\right.\right〉\right) ,$ and the odd mode is given by $\left.\left|{ψ}_{-}\right.\right〉 = \frac{1}{\sqrt{2}} \left(\left.\left|{ψ}_{1}\right.\right〉-\left.\left|{ψ}_{2}\right.\right〉\right) .$

As long as the coupler frequency is off-resonant, the even and odd mode are degenerate. When the coupler frequency reaches the common frequency, a perturbation is introduced in the system, which splits the energy levels of the first and second SQC such that the odd mode stays unaffected (decoupled) and the dynamics is given by a level splitting between the coupler and the even mode.

The system now includes the first SQC, the second SQC and the coupler circuit. In virtue of the equal strength of coupling between the coupler circuit and each SQC, only the even mode |*ψ*₊〉 couples to the state of the coupler circuit, |*ψ_{c}*〉, while the odd mode does not interact with the coupler circuit. It is noted that the coupler circuit does not interact with one SQC at the time, but with both SQCs simultaneously, specifically only through their even mode. Accordingly, the dynamics of the system is determined by the effective two-level system formed by the level splitting of the coupler and the even mode, in which the two diabatic states are the even mode and the coupler circuit state.

These diabatic states experience excitation swaps and Landau-Zener-Stückelberg-Majorana (LZSM) interference, as described in more detail below. The qubit states of the first and second SQCs are related to their superpositions by $\left.\left|{ψ}_{1}\right.\right〉 = \frac{1}{\sqrt{2}} \left(\left.\left|{ψ}_{+}\right.\right〉+\left.\left|{ψ}_{-}\right.\right〉\right) ,$ $\left.\left|{ψ}_{2}\right.\right〉 = \frac{1}{\sqrt{2}} \left(\left.\left|{ψ}_{+}\right.\right〉-\left.\left|{ψ}_{-}\right.\right〉\right) .$

Since the odd mode remains decoupled, phenomena affecting the diabatic state |*ψ*₊〉 affect |*ψ*₁〉 and |*ψ*₂〉 equally.

At a timepoint at which the resonance frequency of the coupler circuit is the common frequency, the system undergoes a Landau-Zener (LZ) transition, meaning that the system can swap excitations between its corresponding diabatic states with a certain probability. The swapping of excitations is a quantum tunnelling process.

Since there are multiple timepoints at which the coupler circuit is at the common frequency, because of the alternating nature of the oscillating signal, the system will undergo multiple contiguous Landau-Zener transitions. In this case, not only there is a change in the excitation probabilities, but also a change in the relative phase between the quantum states occurs. The changes in the relative phase and the tunnelling amplitude depend on the shape of a spectrum of the coupler circuit (frequency vs magnetic flux) and the speed at which the resonance frequency is changed. Because of the quantum nature of the tunnelling event (in particular the finite tunnelling amplitude) and the phase differences acquired in time, the expectation values of the qubit states of the first and second SQCs are subject to quantum interference. This interference is called LZSM interference.

At points of constructive interference, a first qubit state of the first superconducting quantum circuit and a second qubit state of the second superconducting quantum circuit swap, after a certain amount *m* of cycles of the resonance frequency of the coupler circuit, wherein the number of cycles *m* is equal to half the number of timepoints. In other words, if, for instance, the first qubit state is the ground state and the second qubit state is the excited state, by creating constructive interference, the first qubit state will switch to being the excited state and the second qubit state will switch to being the ground state.

More specifically, the interference pattern depends on the acquired phase difference, the speed at which Landau-Zener transitions are induced and the amount of transitions involved. These factors are determined by the properties of the oscillating signal, namely the amplitude, the length and the frequency of the oscillating signal. These three properties may also be referred to as pulse amplitude, pulse length and pulse frequency, respectively. The pulse frequency *f* determines the speed at which the resonance frequency of the coupler circuit is tuned. The pulse amplitude determines the range over which the resonance frequency of the coupler circuit is tuned, i.e. the difference between the minimum resonance frequency and the maximum resonance frequency, which will be referred to as frequency oscillation amplitude in the following. The product of pulse frequency and pulse amplitude approximately determines the speed at which the Landau-Zener transitions occur. The pulse length *tₚ* determines the total amount of induced Landau-Zener transitions for a given pulse frequency, i.e. the number of the plurality of timepoints at which the resonance frequency of the coupler circuit is the common frequency, or, equivalently, the number of cycles *m = ftₚ.*

Additionally, the oscillating signal may be also defined by a pulse offset (e.g. a DC offset voltage for a voltage oscillating signal), wherein the pulse offset may determine a frequency offset between the coupler circuit and the SQCs. The frequency offset may be the difference between the common frequency and the resonance frequency of the coupler circuit when the system is at rest, i.e. no oscillating signal is applied to the coupler circuit. Specifically, in a case in which the coupler circuit is operated in a region where the flux-dependent spectrum tunes linearly in flux, the frequency offset may be the difference between the common frequency and an average resonance frequency of the coupler circuit, the average resonance frequency being the average between the maximum resonance frequency and the minimum resonance frequency. If there is no pulse offset, the frequency offset is determined by intrinsic properties of the coupler circuit and/or by a static magnetic field applied to it.

Summarising, the properties of the oscillating signal, which may be e.g. set by a room-temperature microwave electronics setup, determine the pattern at which the LZ transitions occur and, thus, also the interference pattern.

Accordingly, the properties (also referred to as "parameters") of the oscillating signal, namely the amplitude, the length and the frequency (and, optionally, the offset) of the oscillating signal, are set such that the first qubit state of the first superconducting quantum circuit and the second qubit state of the second superconducting quantum circuit swap. Said otherwise, values for these properties are tuned such that constructive interference occurs. In particular, a part of the values may be chosen a *priori* and the remaining part of the values may be calibrated, e.g. may be selected to satisfy conditions for the interference pattern that leads to the qubit state swapping. Exemplarily, the pulse length and, if present, the pulse offset may be fixed a priori, while the amplitude and frequency may be determined such that swapping occurs given the fixed values of the pulse length and offset. In other examples, all parameters may be free parameters that are jointly determined to achieve the interference pattern.

With regards to the frequency, the constructive peaks of interference in the LZSM interference patterns for the system given by the first and second SQCs and the coupler circuit are present over a large range of frequency values but form very narrow bands within this range. This means that the oscillating signal frequency can be chosen from a large bandwidth but results in a narrowband signal.

For instance, in the case of a voltage signal, as discussed above, the oscillating voltage may be expressed as: $V \left(t\right) = {V}^{AC} sin \left(2πft\right) + {V}^{DC}$ wherein *V^{AC}* is the pulse amplitude, *f* is the pulse frequency and *V^{DC}* is the pulse offset. The swap of the qubit states may be achieved for various frequencies in a range between few MHz and about 300 MHz. However, for a given amplitude, the constructive interference peak may only be present over a frequency range of few MHz. Accordingly, the signal may have a bandwidth around *f* of about 5 MHz.

An exemplary calibration process for an oscillating voltage is described in the following. To calibrate the oscillating signal, one of the SQCs, for example the first SQC, is prepared in the excited state, while the other SQC, e.g. the second SQC, is prepared in the ground state. The parameters are
- pulse length *tₚ*(10s to 100s of ns) (determining m)
- pulse frequency *f*
- pulse amplitude *V_{AC}* (determining the frequency oscillation amplitude A)
- pulse DC-offset *V_{DC}* (determining the frequency offset *ε*)

Exemplarily, *V_{DC}* and *tₚ* can be chosen a priori, e.g. *V_{DC}* = 0, and *tₚ =* 100 ns. The pulse is applied to the coupler circuit with a given frequency and amplitude, and afterwards both qubit states are read-out simultaneously. After a time much longer than the energy relaxation time of the SQCs, the sequence is repeated again, with the same given frequency and amplitude. The sequence may e.g. be repeated thousands of times, due to the statistical nature of the quantum measurement.

Then, the sequence repetition is performed for different pulse frequencies *f* (e.g. in a range of few MHz to 300 MHz) and pulse amplitudes *V_{AC}* (e.g. in a range between 0.10 V and 0.30 V) and the average measured populations for the first and second SQCs are plotted versus *f* and *V_{AC}.* The plots show features occurring on both plots coinciding with population of the first SQC close to 0, and population of the second SQC close to 1, meaning that, for those specific pulse parameters, qubit excitations have swapped.

In particular, these features may appear for frequencies obeying the constructive interference condition $f = \frac{ϵ}{n}$, with *n* being an integer, and for amplitudes obeying the condition cos *mα* = cos(*tₚfα*) = -1, which may be helpful to achieve a full swap. The angle *α* determines the strength of the swapping between the two SQCs for one single coupler oscillation cycle (*m* = 1, which is equivalent to two LZ transitions). It is proportional to the frequency oscillation amplitude *A*: $α ∝ \sqrt{\frac{A}{f}} {J}_{n} \left(\frac{A}{f}\right)$ where *Jₙ*(...) is the *n*-th order Bessel function of the first kind, with *n* being the same integer of the constructive interference condition. Physically, the condition for constructive interference *ε = nf* is equivalent to the energy conservation condition that allows for n-photon absorption to drive transitions between the coupler and the SQCs which are detuned by the offset frequency *ε*.

Accordingly, for a given *tₚ* and *V_{DC},* the calibration of *V_{AC}* and *f* will depend on these values. Moreover, a specific combination of *V_{AC}* and *f* can lead to swapping for a given *V_{DC}* but not for another *V_{DC},* specifically for combinations in which $ϵ = \left(n+\frac{1}{2}\right) f$ obeys the destructive interference condition. This opens up the possibility to calibrate and address several coupler circuits with the same drive line, as a specific frequency affects only a calibrated coupler circuit, but not the other coupler circuits that are tuned to a different *ε*. There are many possible combinations, as there are many distinct combinations of *ε* and *f* for a given *n,* and on top, there are many *n* to choose from.

Mathematically, if an initial first qubit state is $\left|{ψ}_{1 , i}\right〉 = cos \frac{{θ}_{1}}{2} \left|0\right〉 + {e}^{{iφ}_{1}} sin \frac{{θ}_{1}}{2} \left|1\right〉$ and an initial second qubit state is $\left|{ψ}_{2 , i}\right〉 = cos \frac{{θ}_{2}}{2} \left|0\right〉 + {e}^{{iφ}_{2}} sin \frac{{θ}_{2}}{2} \left|1\right〉$ such that the joint 2-qubit product state vector is $\begin{matrix}\left|{ψ}_{1 , 2 , i}\right〉 = cos \frac{{θ}_{1}}{2} cos \frac{{θ}_{2}}{2} \left|00\right〉 + {e}^{{iφ}_{2}} cos \frac{{θ}_{1}}{2} sin \frac{{θ}_{2}}{2} \left|01\right〉 + {e}^{{iφ}_{1}} sin \frac{{θ}_{1}}{2} cos \frac{{θ}_{2}}{2} \left|10\right〉 \\ + {e}^{i \left({φ}_{1}+{φ}_{2}\right)} sin \frac{{θ}_{1}}{2} sin \frac{{θ}_{2}}{2} \left|11\right〉\end{matrix}$ then the final 2-qubit state after the excitation swap is given as $\begin{matrix}\left|{ψ}_{1 , 2 , f}\right〉 = cos \frac{{θ}_{1}}{2} cos \frac{{θ}_{2}}{2} \left|00\right〉 \\ + \left(\begin{matrix}\frac{1}{2} \left(cos mα+1\right) {e}^{{iφ}_{2}} cos \frac{{θ}_{1}}{2} sin \frac{{θ}_{2}}{2} \\ + \frac{1}{2} \left(cos mα-1\right) {e}^{{iφ}_{1}} cos \frac{{θ}_{2}}{2} sin \frac{{θ}_{1}}{2}\end{matrix}\right) \left|01\right〉 \\ + \left(\begin{matrix}\frac{1}{2} \left(cos mα+1\right) {e}^{{iφ}_{1}} cos \frac{{θ}_{2}}{2} sin \frac{{θ}_{1}}{2} \\ + \frac{1}{2} \left(cos mα-1\right) {e}^{{iφ}_{2}} cos \frac{{θ}_{1}}{2} sin \frac{{θ}_{2}}{2}\end{matrix}\right) \left|10\right〉 \\ + cos mα {e}^{i \left({φ}_{1}+{φ}_{2}\right)} sin \frac{{θ}_{1}}{2} sin \frac{{θ}_{2}}{2} \left|11\right〉\end{matrix}$

As explained, the pulse may be calibrated to fulfil the conditions for constructive interference *ε = nf,* which may be achieved by either choosing a frequency offset to match an integer multiple of the drive frequency, or choosing a drive frequency to match a given integer inverse of the frequency offset. Additionally, as mentioned, the angle *α* may be set to facilitate a full swapping of the states by tuning *A* and/or the pulse length. Specifically, A and *m* may be set to fulfil cos *mα* = -1.

In this case, $\begin{matrix}\left|{ψ}_{1 , 2 , f}\right〉 = cos \frac{{θ}_{1}}{2} cos \frac{{θ}_{2}}{2} \left|00\right〉 - {e}^{{iφ}_{1}} cos \frac{{θ}_{2}}{2} sin \frac{{θ}_{1}}{2} \left|01\right〉 - {e}^{{iφ}_{2}} cos \frac{{θ}_{1}}{2} sin \frac{{θ}_{2}}{2} \left|10\right〉 \\ - {e}^{i \left({φ}_{1}+{φ}_{2}\right)} sin \frac{{θ}_{1}}{2} sin \frac{{θ}_{2}}{2} \left|11\right〉\end{matrix}$ is the final 2-qubit state for any initial state of the two SQCs and the coupler circuit in the ground state. If the coupler circuit starts in the excited state, the final state is -|*ψ*_{1,2*,f*}〉.

As can be seen from a comparison between |*ψ*_{1,2*,f*}〉 and |*ψ*_{1,2*,f*}〉, the angles have swapped. In matrix notation, the matrix transforming |*ψ*_{1,2*,f*}〉 to |*ψ*_{1,2*,f*}〉 is $\left(\begin{matrix}1 & 0 & 0 & 0 \\ 0 & 0 & - 1 & 0 \\ 0 & - 1 & 0 & 0 \\ 0 & 0 & 0 & - 1\end{matrix}\right)$ where the basis is given in the order of the qubit states as $\begin{matrix}\left|00\right〉 \\ \left|01\right〉 \\ \left|10\right〉 \\ \left|11\right〉\end{matrix}$

According to the method described herein, two SQCs can be efficiently coupled by applying a narrowband signal to a coupler circuit. Indeed, the relation between amplitude and frequency of the signal, in virtue of the phenomenon of the LZSM interference, is such that, for a given pulse amplitude, the same pulse being played at any other frequency in a broadband does not affect the coupling between two specific SQCs. Furthermore, the choice of the frequency of the narrowband signal is independent of the individual properties of the SQCs, such as details of their spectra, since the even mode is involved in the LZ transitions. While in conventional techniques, coupling schemes are strictly constrained by the parameters of the SQCs, in the present disclosure there are plural frequency values suitable for coupling across a large bandwidth, e.g. 300 MHz. Accordingly, the frequency of a coupling activation signal, namely the oscillating signal, can be chosen from a large bandwidth but the coupling activation signal itself is a narrowband signal (e.g. having a bandwidth of 5MHz).

The combination of these two factors means that, in a system comprising a plurality of SQC pairs, it is possible to effectively separate in frequency the activation signals for the various pairs, avoiding frequency collisions and errors through falsely activated operations, i.e. avoiding cross-talk. For SQCs aligned in frequency, this also opens up the possibility of multiplexing SQC coupling activation signals on a single line, removing the technological overhead of parallel, individual signal lines for each coupler circuit.

Furthermore, the coupling depends on the actual discrete number of LZ transitions, rendering the coupling robust to errors such as small deviations of the pulse amplitude and length. Finally, it is noted that the coupling according to the present disclosure does not need fast on-off control via room temperature electronics.

In a particular example, each of the superconducting quantum circuit described above (in particular the first SQC and the second SQC, and, if present the coupler SQC) may have the structure described in EP patent application 23 160 990, which is herewith incorporated by reference. In particular, each SQC may comprise:
- a nonlinear element;
- a first wiring section having a first end and a second end, wherein both the first end and the second end are connected to the nonlinear element;
- a conductive element;
- a second wiring section connecting the conductive element to the first wiring section;
- a first capacitive element and a second capacitive element identical to the first capacitive element;
- a third wiring section connecting the first capacitive element to the first wiring section; and
- a fourth wiring section connecting the second capacitive element to the first wiring section;
wherein:
the first capacitive element and the second capacitive element are arranged such that a symmetry line equidistant from the first capacitive element and the second capacitive element intersects the nonlinear element;
the first wiring section is bisected into a first branch and a second branch by the symmetry line, the first branch being geometrically identical to the second branch; the first branch has a first kinetic inductance, the second branch has a second kinetic inductance, and the first kinetic inductance is different from the second kinetic inductance;
the second wiring section substantially lies on the symmetry line and does not contact the nonlinear element; and
the conductive element is bisected by the symmetry line.

The nonlinear element may be, for example, a Josephson junction.

In this case, as explained above, to maintain symmetry, each qubit-readout chip may have two coupling components.

In a particular example, the first SQC and the second SQC may define a pair of SQCs and the method may be applied to each pair of a plurality of pairs of SQCs. For instance, there may be a case with two pairs of SQCs, a first pair comprising a first SQC and a second SQC and a second pair comprising the second SQC and a third SQC. In this case, the method may comprise:
- providing the first SQC in a first enclosure, the second SQC in a second enclosure, and the third SQC in a third enclosure, wherein the first enclosure, the second enclosure and the third enclosure electromagnetically isolate the first SQC, the second SQC and the third SQC, respectively;
- electromagnetically coupling a first coupler circuit to the first SQC and to the second SQC, wherein the first SQC and the second SQC are coupled to the first coupler circuit with equal strength;
- electromagnetically coupling a second coupler circuit to the second SQC and to the third SQC, wherein the second SQC and the third SQC are coupled to the second coupler circuit with equal strength;
- setting a resonance frequency of the first SQC to a common frequency;
- setting a resonance frequency of the second SQC to the common frequency;
- setting a resonance frequency of the third SQC to the common frequency;
- applying a first oscillating signal that makes a resonance frequency of the first coupler circuit cyclically change such that the resonance frequency of the first coupler circuit is equal to the common frequency at a plurality of timepoints, wherein an amplitude, a length and a frequency of the first oscillating signal are set such that a first qubit state of the first SQC and a second qubit state of the second SQC swap; and
- applying a second oscillating signal that makes a resonance frequency of the second coupler circuit cyclically change such that the resonance frequency of the second coupler circuit is equal to the common frequency at a plurality of timepoints, wherein an amplitude, a length and a frequency of the second oscillating signal are set such that the second qubit state of the second SQC and a third qubit state of the third SQC swap;
wherein:
the first oscillating signal and the second oscillating signal are applied on the same signal line;
a first offset of a resonance frequency at rest of the first coupler circuit with respect to the common frequency is different from a second offset of a resonance frequency at rest of the second coupler circuit with respect to the common frequency.

In particular, the first offset and the second offset may be such that they do not have a common divisor that would yield an integer quotient for both offsets.

As explained above, the swapping occurs when the constructive interference condition *ε* = *nf* is satisfied. If the two couplers have different frequency offsets, the swapping for the first pair and the second pair of SQCs will occur for different signal frequencies. Furthermore, as mentioned above, the oscillating signals are narrowband. Thus, the first oscillating signal will induce the first qubit state of the first SQC and the second qubit state of the second SQC to swap, but will leave the second qubit state of the second SQC and the third qubit state of the third SQC unperturbed, i.e. they do not swap. Conversely, the second oscillating signal will cause the second qubit state of the second SQC and the third qubit state of the third SQC to swap, while the first qubit state of the first SQC and the second qubit state of the second SQC will not swap. Accordingly, the same signal line can be used for the first and second oscillating signals.

Another aspect of the present invention relates to a system. The system comprises:
a first superconducting quantum circuit and a second superconducting quantum circuit,
wherein the first superconducting quantum circuit and the second superconducting quantum circuit are electromagnetically isolated from each other; and
a coupler circuit being electromagnetically coupled to the first superconducting quantum circuit and to the second superconducting quantum circuit, wherein the first superconducting quantum circuit and the second superconducting quantum circuit are coupled to the coupler circuit with equal strength;
wherein:
   a resonance frequency of the first superconducting quantum circuit is set to a common frequency;
   a resonance frequency of the second superconducting quantum circuit is set to the common frequency;
   the system is configured such that a resonance frequency of the coupler circuit is tunable by an oscillating signal, the oscillating signal being configured to cyclically change the operating frequency of the coupler circuit such that the resonance frequency of the coupler circuit is equal to the common frequency at a plurality of timepoints; and
   an amplitude and a frequency of the oscillating signal are set such that a first qubit state of the first superconducting quantum circuit and a second qubit state of the second superconducting quantum circuit are configured to swap.

All the features described in relation to the aspect of the method apply mutatis mutandis to the aspect of the system, and vice versa.

In a particular example, the system may comprise a plurality of pairs of SQCs, each pair of SQCs being configured to be coupled by a coupler circuit. An SQC may be comprised in two different pairs. Exemplarily, the SQCs may be positioned in a row, each one in a respective enclosure, and each pair of adjacent SQCs may be coupled by a coupler circuit. Thus, the number of coupler circuits may be equal to the number of SQCs minus one.

### Brief Description of the Drawings

Details of exemplary embodiments are set forth below with reference to the exemplary drawings. Other features will be apparent from the description, the drawings, and from the claims. It should be understood, however, that even though embodiments are separately described, single features of different embodiments may be combined to further embodiments.
Figure 1 shows an exemplary method for indirectly coupling two superconducting quantum circuits.
Figure 2 shows a schematic representation of two superconducting quantum circuits coupled by a coupler circuit to which an external voltage is applied.
Figure 3 shows exemplary spectra of a first superconducting quantum circuit, a coupler circuit and a second superconducting quantum circuit.
Figure 4 shows an exemplary energy diagram of two superconducting quantum circuits coupled by a coupler circuit.
Figure 5 shows a frequency plot with Landau-Zener transitions.
Figures 6 and 7 show LZSM interference patterns.
Figure 8 shows a cross section of a container for hosting two superconducting quantum circuits coupled by a coupler circuit.
Figure 9 shows a circuit diagram of two superconducting quantum circuits coupled by a coupler circuit, as well as of control circuits and magnetic field coils.
Figure 10 shows exemplary layouts of a qubit-readout chip, a coupler chip and a control chip.
Figure 11 shows a detail of the exemplary layout of the qubit-readout chip in figure 10.

### Detailed Description

In the following, a detailed description of examples will be given with reference to the drawings. It should be understood that various modifications to the examples may be made. Unless explicitly indicated otherwise, elements of one example may be combined and used in other examples to form new examples.

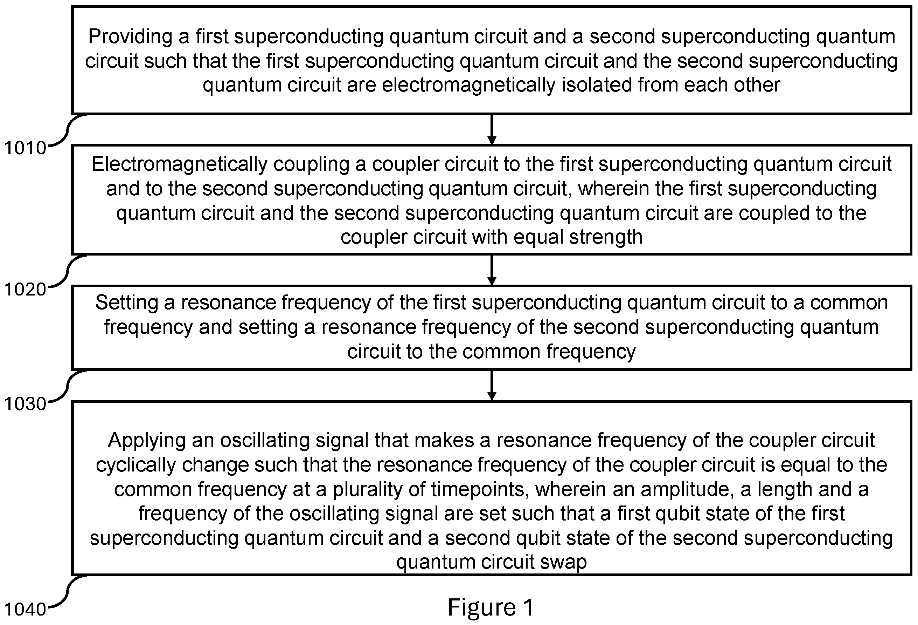

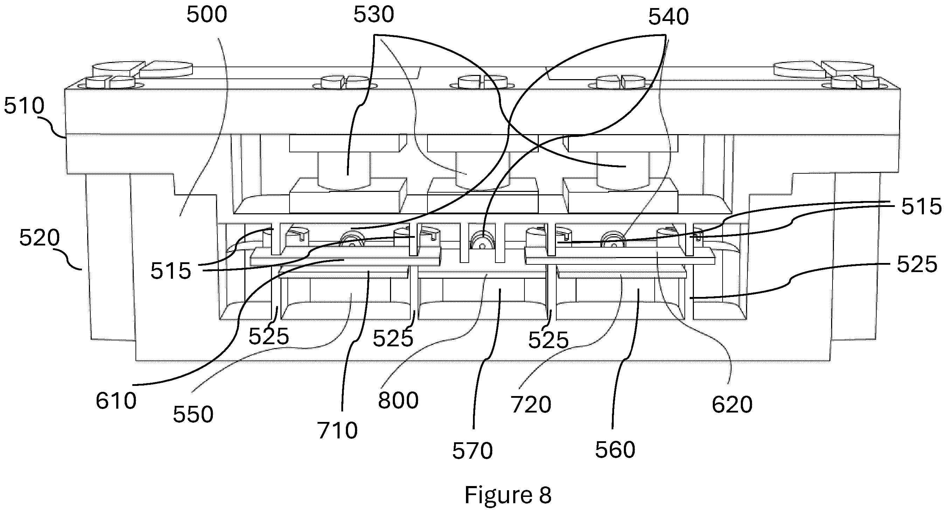

**Figure 1** shows an exemplary method for indirectly coupling two superconducting quantum circuits. At 1010 the method comprises providing a first SQC and a second SQC such that the first superconducting quantum circuit and the second superconducting quantum circuit are electromagnetically isolated from each other. Exemplarily, this may comprise providing the first SQC in a first enclosure and the second SQC in a second enclosure, wherein the first enclosure and the second enclosure electromagnetically isolate the first SQC and the second SQC, respectively. Examples of enclosures are shown in figure 8, discussed below.

At 1020 the method comprises electromagnetically coupling a coupler circuit to the first SQC and to the second SQC, wherein the first SQC and the second SQC are coupled to the coupler circuit with equal strength.

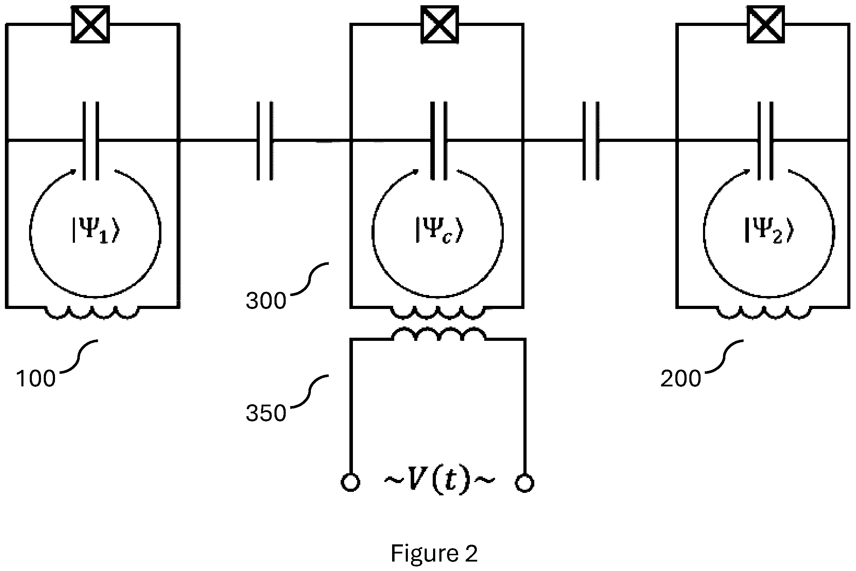

**Figure 2** shows a schematic representation of two superconducting quantum circuits 100, 200 coupled by a coupler circuit 300 to which an external voltage is applied by means of a coil 350. The first SQC 100 has a qubit state |*ψ*₁〉 while the second SQC 200 has a qubit state |*ψ*₂〉. The coupler circuit 300 has a state |*ψ_{c}*〉; exemplarily the coupler circuit may also comprise a coupler SQC, so that the state |*ψ_{c}*〉 is also a qubit state. The example shown throughout the figures is indeed of a coupler SQC, however the coupler circuit 300 may also be a linear circuit.

Each SQC is schematically represented in figure 2 by a non-linear element, a capacitor and an inductor. Accordingly, each SQC is a flux qubit in the implementation shown in the figures. In particular, the non-linear element may be an Al/ Al₂O₃/Al tunnel junction, the inductor may be made of granular aluminium, and the capacitor may be made of aluminium.

The coupler circuit 300 is capacitively coupled to the first SQC 100 and to the second SQC 200, thereby creating an indirect coupling between the first SQC 100 and the second SQC 200.

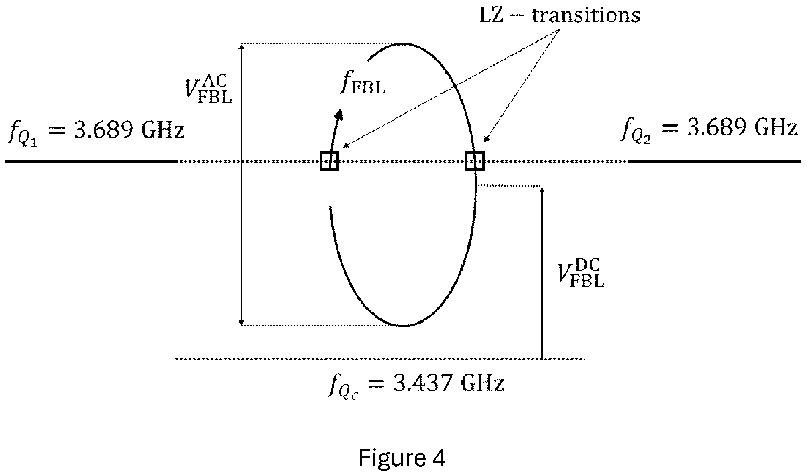

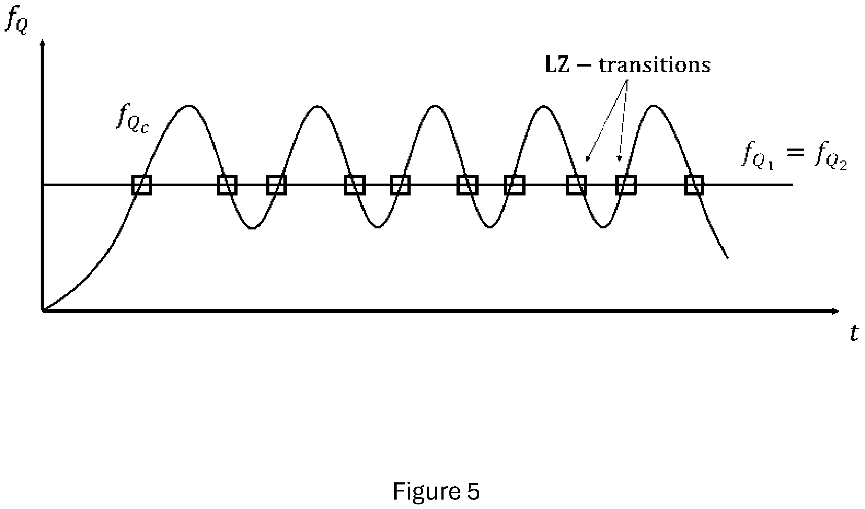

Figure 2 also shows a schematic representation of a coil 350 (e.g. made of superconducting material in the form of a wire). An oscillating voltage *V*(*t*) is applied to the coil to generate an oscillating current, which in turn generates a time-dependent (in particular, oscillating) magnetic field. As a result, there is a time-dependent magnetic flux threading the coupler SQC and, thus, changing its resonance frequency, as discussed in more detail with reference to figures 4 and 5 below.

In general, the resonance frequency of each SQC can be tuned by applying a magnetic field. Indeed, each flux qubit has a closed superconducting loop that enables this tuning. Going back to figure 1, the method further comprises at 1030 setting a resonance frequency of the first SQC 100 to a common frequency and setting a resonance frequency of the second SQC 200 to the common frequency.

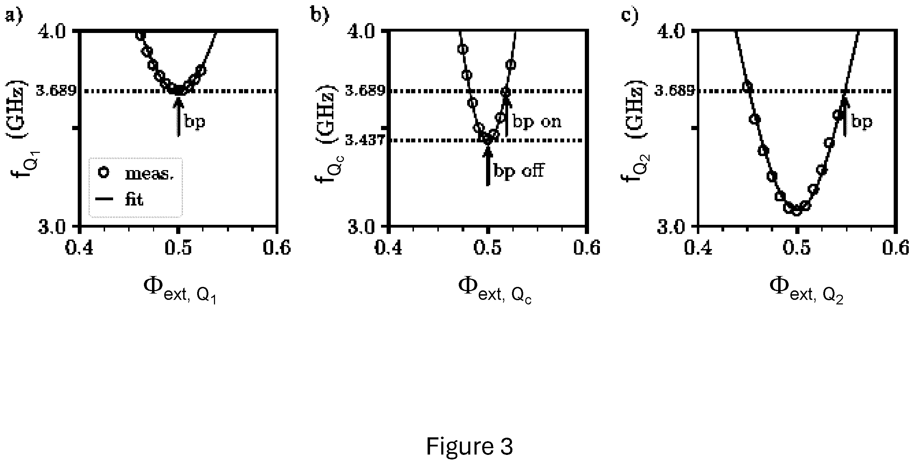

**Figure 3** shows exemplary spectra of the first SQC 100, the coupler circuit 300 and the second SQC 200. In particular, figure 2 shows the resonance frequency of each circuit as measured values (circles) and as a fit (line) as a function of the applied external magnetic flux Φₑₓₜ in units of the flux quantum Φ₀.

The common frequency is set to be the resonance frequency *f*_{*Q*₁} of the first SQC 100 for a Φ_{ext, *Q*1} = Φ₀/2, which is, in this example, equal to about 3.689 GHz. The first and second SQCs are operated with a constant resonance frequency equal to the common frequency, i.e. *f*_{*Q*₁} = *f*_{*Q*₂} = 3.689 *GHz.* Instead, the coupler circuit 300 is operated with a variable resonance frequency, which moves from being off-resonant (i.e. different from the common frequency) to being on-resonant (i.e. equal to the common frequency). The on-resonant point of *f_{Q_{c}},* i.e. the point at which *f_{Q_{c}}* = 3.689 *GHz,* is indicated by the arrow "bp on" in figure 3. The minimum resonance frequency of the coupler circuit 300 is at half-flux point and has a value of about 3.437 GHz. When *f_{Q_{c}} =* 3.437 *GHz,* and, in general, when *f_{Q_{c}}* ≠ 3.689 *GHz,* there is no coupling between the coupler circuit 300 and the two SQCs 100, 200. Conversely, when the resonance frequency of the coupler circuit 300 is the common frequency, a coupling is established.

Going back to figure 1, at 1040 the method comprises applying an oscillating signal that makes a resonance frequency of the coupler circuit 300 cyclically change such that the resonance frequency of the coupler circuit 300 is equal to the common frequency at a plurality of timepoints.

In particular, the resonance frequency of the coupler circuit 300 is varied by applying the oscillating voltage *V*(*t*) to the coil 350, which may be referred to as a flux bias line (FBL). More specifically, the oscillating voltage is given by: $V \left(t\right) = {V}_{FBL}^{AC} sin \left(2{πf}_{FBL}t\right) + {V}_{FBL}^{DC}$

The effect of the oscillating voltage is visually rendered in **Figure 4****,** which shows an exemplary energy diagram of the two SQCs 100, 200 coupled by the coupler circuit 300.

The resonance frequencies of the first and second SQCs 100, 200 are tuned to the common frequency, so that their wavefunctions hybridise into their even |*ψ*₊〉 and odd |*ψ*₋〉 modes superposition. As long as the resonance frequency of the coupler circuit 300 is detuned, i.e. different from the common frequency, the corresponding level splitting is negligible and the even and odd modes are degenerate. When the oscillating pulse is applied to the FBL, the resonance frequency of the coupler circuit 300 varies cyclically and crosses the common frequency twice per cycle, at which point LZ transitions occur between the coupler state |*ψ_{c}*〉 and the even mode |*ψ*₊〉.

This is also visible in **figure 5****,** which shows a frequency plot with Landau-Zener transitions. In this figure it is more clearly visible that the resonance frequency of the coupler circuit 300 is equal to the common frequency at a plurality of timepoints. The specific pattern at which the LZ transitions occur is determined by the parameters of the oscillating signal, which include ${V}_{FBL}^{AC} , {f}_{FBL} , {V}_{FBL}^{DC}$ and the signal length *tₚ.* These parameters are determined by the room-temperature microwave electronics setup. The finite tunnelling amplitude in combination with the phase differences acquired in time between the even mode and the coupler mode determine the resulting LZSM interference pattern that can be observed in the populations of the SQCs.

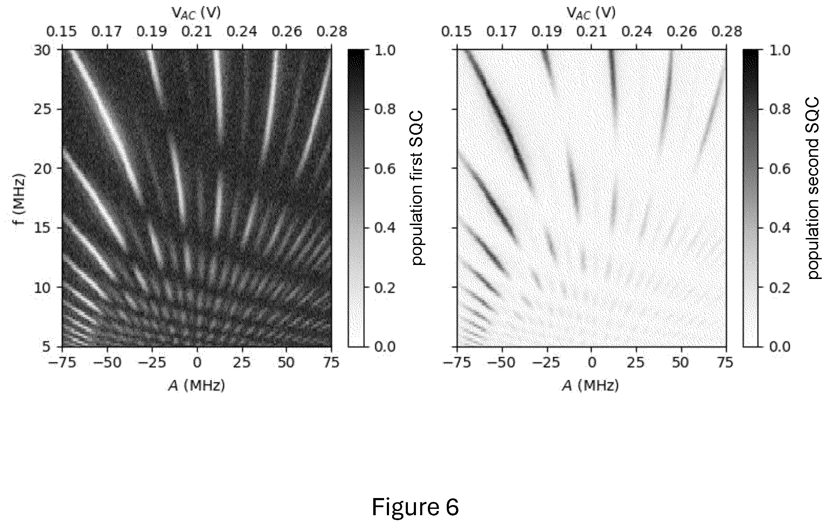

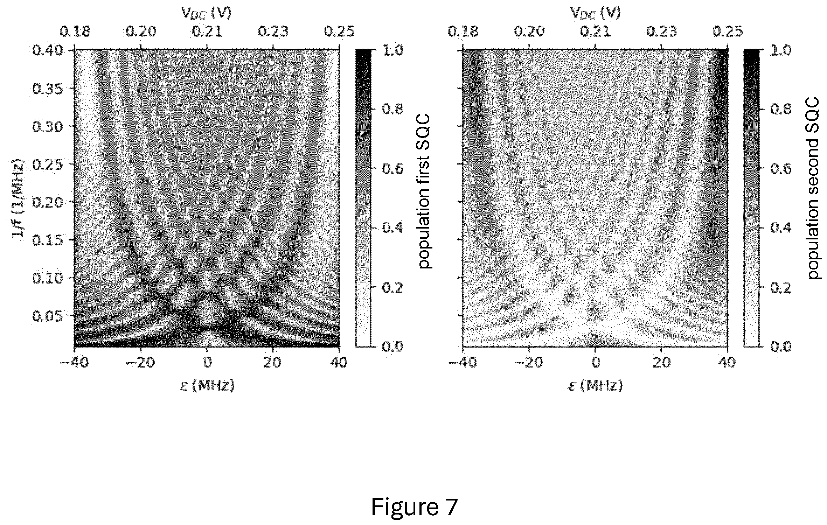

**Figures 6** **and** **7** show such LZSM interference patterns. In figure 6 the frequency *f_{FBL}* and the signal amplitude ${V}_{FBL}^{AC}$ are varied while keeping the other parameters constant. The signal amplitude ${V}_{FBL}^{AC}$ determines the frequency oscillating amplitude *A* for the coupler circuit 300, which is also shown in the plots. In figure 7 the frequency *f_{FBL}* and the signal DC offset ${V}_{FBL}^{DC}$ are varied while keeping the other parameters constant. The signal DC offset ${V}_{FBL}^{DC}$ determines the frequency offset *ε* for the coupler circuit 300 with respect to the common frequency, wherein the frequency offset *ε* is also shown in the plots. In each of figures 6 and 7, the left-side plot shows the population of the first SQC 100 and the right-side plot shows the population of the second SQC 200.

It can be seen that, for certain values of the parameters, there is a swap between the first qubit state of the first SQC 100 and the second qubit state of the second SQC 200. Accordingly, the amplitude, the length and the frequency of the oscillating signal are set such that this swap occurs. In particular, the length may be set *a priori.* The DC offset may be set a priori or also calibrated using the plots of figure 7.

Specifically, the parameters of the oscillating signal may be set such that two conditions are satisfied, namely: ${f}_{FBL} = \frac{ϵ}{n}$ and $cos \left({t}_{p}{f}_{FBL}α\right) = - 1$

The angle *α* depends on *A* (including factors like the microscopic circuit parameters, speed of LZ transition, avoided level repulsion), in particular it depends on A as $α ∝ \sqrt{\frac{A}{f}} {J}_{n} \left(\frac{A}{f}\right)$ and, thus, can be tuned by tuning ${V}_{FBL}^{AC}$*.* These two conditions give rise to the periodicity visible in the calibration plots in figures 6 and 7 along the frequency, amplitude and offset axes.

As can be seen from figures 6 and 7, the constructive peaks of interference in the LZSM interference patterns for the system given by the first 100 and second SQCs 200 and the coupler circuit 300 are present over a large range of frequency values but form very narrow bands within this range. This means that the oscillating signal frequency can be chosen from a large bandwidth but results in a narrowband signal.

**Figure 8** shows a cross section of a container 500 for hosting two SQCs 100, 200 coupled by a coupler circuit 300. The container 500 comprises a lid component 510 and a base component 520, which are connected to each other by means of screws.

The container 500 is exemplarily made of copper. The lid component 510 and the base component 520 together form a first enclosure 550, a second enclosure 560 and a coupler enclosure 570. In particular, the lid component 510 comprises a plurality of lid walls 515 and the base component 520 comprises a plurality of base walls 525, wherein the lid walls 515 and the base walls 525 are aligned with each other. A distance between the centre planes of each pair of adjacent enclosures is about 60 µm.

The first enclosure 550 accommodates a first readout-qubit chip 610 and a first control chip 710. The first readout-qubit chip 610 comprises a substrate and the first SQC 100 (not shown) formed on a surface of the substrate, e.g. the bottom surface that faces the first control chip 710. A pair of coupling components (not shown) connected to the first SQC 100 are also formed on the surface of the substrate, and one of these coupling components is located in the coupler enclosure 570. The first control chip 710 comprises a substrate and a first control circuit (not shown) that couples the first SQC to a first readout port and to a first flux control port. The first control circuit is formed on the top surface of the substrate, the one facing the first readout-qubit chip 610. The distancer between the first readout-qubit chip 610 and the first control chip 710 is of about 50 µm.

The second enclosure 560 accommodates a second readout-qubit chip 620 and a second control chip 720. The second readout-qubit chip 620 comprises a substrate and the second SQC 200 (not shown) formed on a surface of the substrate, e.g. the bottom surface that faces the second control chip 720. A pair of coupling components (not shown) connected to the second SQC 200 are also formed on the surface of the substrate, and one of these coupling components is located in the coupler enclosure 570. The second control chip 720 comprises a substrate and a second control circuit (not shown) that couples the second SQC to a second readout port and to a second flux control port. The second control circuit is formed on the top surface of the substrate, the one facing the second readout-qubit chip 620. The distancer between the second readout-qubit chip 620 and the second control chip 720 is of about 50 µm.

The coupler enclosure 570 accommodates a coupler chip 800, which comprises a substrate and the coupler circuit 300 (not shown) formed on the substrate, specifically on the upper surface of the substrate, which faces the protruding first and second readout-qubit chips. The coupler circuit 300 comprises a pair of coupling components, each one for coupling to a respective SQC of the first and second SQCs. Furthermore, a flux bias line is formed on the substrate of the coupler chip 800.

The container 500 comprises static bias coils 530 integrated in the lid component 510 for controlling the static magnetic field in each enclosure and coaxial ports 540 that are connected to the control chips 710, 720 and to the coupler chip 800. The coaxial port 540 in the coupler enclosure 570 connects the FBL formed on the coupler chip 800 to any electronics needed for the pulse, e.g. a voltage generator, a waveform generator or a microwave signal generator. The other two coaxial ports 540 are configured to enable radiofrequency transmission. Exemplarily, the coaxial ports 540 may have 50 Ohm impedance and be configured for microwave transmission in the MHz and GHz range.

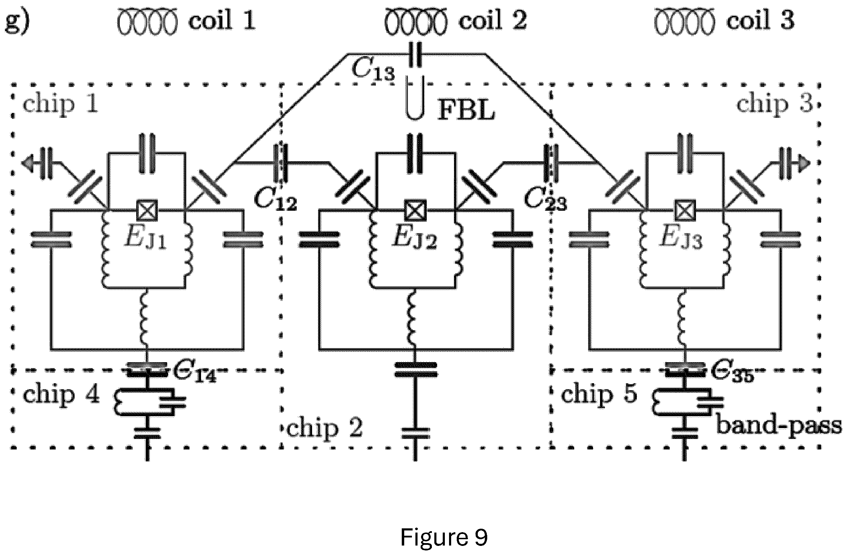

**Figure 9** shows a circuit diagram of the two SQCs 100, 200 coupled by the coupler circuit 300, as well as of control circuits and static bias coils 530. The schematic diagram of figure 9 shows the circuit representation of the first SQC 100 belonging to the first readout-qubit chip 610 ("chip 1"), the first control circuit belonging to the first control chip 710 ("chip 4"), the control circuit 300 belonging to the coupler chip 800 ("chip 2"), the second SQC 200 belonging to the second readout-qubit chip 620 ("chip 3"), and the second control circuit belonging to the second control chip 710 ("chip 5"). The FBL on the coupler chip 800 as well as the static bias coils 530 are also shown.

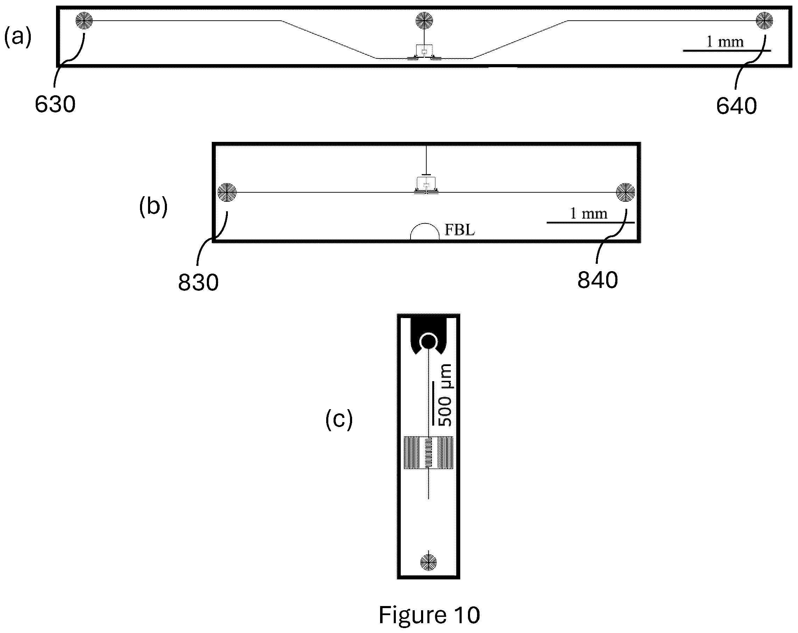

Exemplary layouts of a qubit-readout chip, i.e. chip 610 or 620, a coupler chip, i.e. chip 800, and a control chip, i.e. chip 710 or 720, are shown in **figure 10****.** A qubit-readout chip (view (a)) comprises an SQC and a pair of coupling components 630, 640 connected to the SQC. It is exemplarily made of a combination of Al and granular Al. A coupler chip (view (b)) comprises the coupler circuit 300, which includes a pair of coupling elements 830 and 840. The coupler circuit 300 may also be an SQC made of a combination of Al and granular Al. The coupler chip further comprises the FBL. A control chip (view (c)) comprises a control circuit, which includes a band-pass portion.

Going back to figure 9, the coupling capacitances *C*₁₂ and *C*₂₃ represent the coupling between the coupler circuit 300 and the first SQC 100 as well as the second SQC 200, respectively, as achieved by the coupling elements 830, 840 of the coupler circuit 300 and a respective coupling component 630 or 640 of each SQC. The coupling capacitance *C*₁₄ represents the coupling between the first SQC 100 and the first control circuit and the coupling capacitance *C*₃₅ represents the coupling between the second SQC 200 and the second control circuit. The capacitance *C*₁₃ is not designed and represents a parasitic direct capacitive coupling between the first and second SQCs that occurs accidentally.

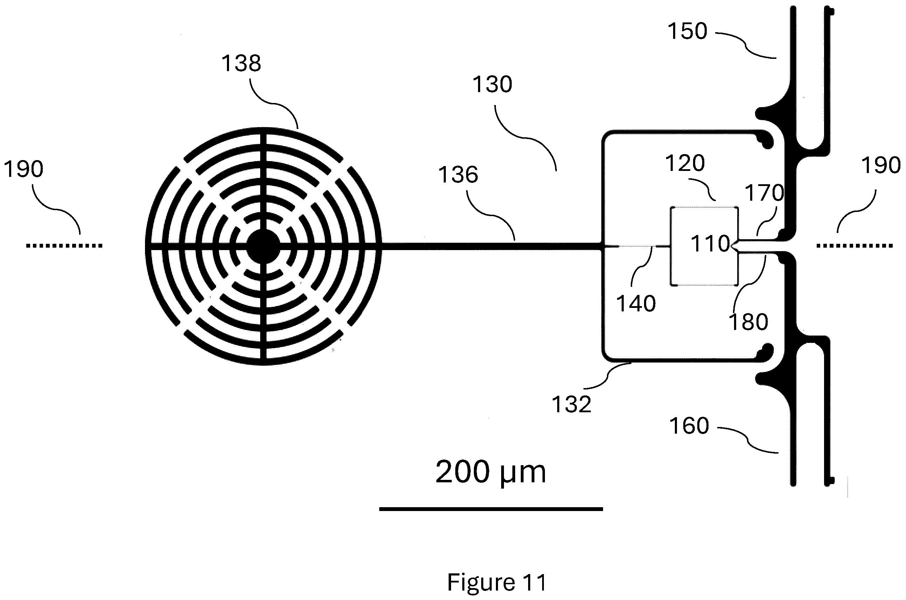

**Figure 11** shows an enlargement of the design of the SQC from view (a) of figure 10. The SQC of Figure 11 comprises a nonlinear element 110, a first wiring section 120, a conductive element 130, a second wiring section 140, a first capacitive element 150, a second capacitive element 160, a third wiring section 170 and a first wiring section 180. The SQC is symmetric with respect to the symmetry line 190, of which only two segments are shown in Figure 11 for the sake of clarity of representation of the circuit.

The materials used for the SQC are aluminium and granular aluminium (grAl). The SQC can be fabricated on a substrate via electron beam nanolithography of aluminium and three-angle shadow evaporation of grAl.

Considering a direction along the symmetry lines 190, the components of the superconducting quantum circuit are arranged in a spatial sequence starting from the conductive element 130 and ending with the first and second capacitive elements 150, 160.

The conductive element 130 is formed by a layer of grAl and two layers of aluminium. The thickness of the first aluminium layer is 20 nm, the thickness of the second aluminium layer is 30 nm and the thickness of the grAl layer is 70 nm, so that the overall thickness of the wire is 120 nm. Exemplarily, the layer of grAl is on top of the two aluminium layers, however the order of the layers may be any permutation of the exemplary order. The width of the wire may vary in different parts and may generally be less than 5 µm. This wire configuration will be referred to in the following as "aluminium-shunted grAl". The wiring portions made of aluminium-shunted grAl are lower-inductance portions.

The conductive element 130 comprises a circular element 138, a fifth wiring section 136 and an enclosing portion 132. The wiring of the circular element 138 comprises a cross structure having four bars extending from a core, wherein each bar is perpendicular to its adjacent bars, so that there are two pairs of opposite bars, wherein the opposite bars are aligned. One pair may be along the symmetry line 190 while the other pair is on the direction perpendicular to the symmetry line 190. The wiring of the circular element 138 further comprises a plurality of (e.g. six) discontinuous circles arranged concentrically, wherein each discontinuous circle comprises four separated arcs and each arc is connected to a respective bar. Each arc may subtend an angle of 90°. The circular element 130 is bisected by the symmetry line 190. The overall length of a pair of opposite bars, which coincides with the diameter of the outermost discontinuous circle, is about 200 µm.

The fifth wiring section 136 is a straight portion of wire that lies on the symmetry line 190. Its first end is connected to one of the bars of the circular element 138 (such that the fifth wiring section 136 is the continuation of the bar), and its second end is connected to the enclosing portion 132. The length of the fifth wiring section 136 is about 200 µm.

The enclosing portion 132 comprises a first arm and a second arm, wherein the first arm is identical to the second arm. Indeed, the enclosing portion 132 is bisected by the symmetry line 190 into the first arm and the second arm. The enclosing portion 132 comprises a straight wiring segment perpendicular to the symmetry line 190, one half of which belongs to the first arm and the other half of which belongs to the second arm. This wiring segment is connected to the fifth wiring section 136 and it is about 200 µm long. The enclosing portion 132 further comprises two straight wiring segments parallel to the symmetry line 190 (and to each other), each segment connected to a respective end of the wiring segment perpendicular to the symmetry line 190. Each parallel wiring segment belongs to a respective arm and is about 150 µm long.

Each arm is substantially L-shaped. The width of the wire at the terminal portion of each arm is thicker than in the rest of the enclosing portion 132, wherein the terminal portion is the part at the end of the parallel wiring segment (i.e. most distant from the perpendicular wiring segment) and having a length of e.g. about 1/8 of the overall length of the parallel wiring segment. Each terminal portion may have at least one round edge facing the respective capacitive element (e.g., each terminal portion may have a notehead-like shape). In particular, the terminal portion of each arm forms a capacitor with the first and second capacitive element, respectively, as described below.

The SQC further comprises the second wiring section 140, which has one end connected to the conductive element 130 (in particular the fifth wiring section 136) and the other end connected to the first wiring section 120. The connection point between the second wiring section 140 and the conductive element 130 is hereinafter referred to as "first node". The second wiring section 140 is a straight portion of wire that lies on the symmetry line 190. The second wiring section 140 comprises a higher-inductance portion (hereinafter referred to as "third higher-inductance portion") with inductance *Lᵣ*. The third higher-inductance portion is made of granular aluminium wire with a thickness of 70 nm, a width of 200 nm and a sheet inductance of L_{□}=80±5 pH/□. The parts of the second wiring section 140 connecting the third higher-inductance portion to the rest of the circuit are lower-inductance portions made of aluminium-shunted grAl. The third higher-inductance portion of the second wiring section 140 has a length of about 35 µm, while the second wiring section 140 as a whole has a length of about 60 µm.

The SQC further comprises the first wiring section 120, which has a rectangular shape. The extent of the rectangle in the direction of the symmetry line 190 is about 60 µm and the extent of the rectangle in the other direction is about 70 µm. Both ends of the first wiring section 120 are connected to the nonlinear element 110, so that the first wiring section 120 and the nonlinear element 110 are referred to as "the qubit loop". The nonlinear element 110 is a Josephson junction, in particular a superconductor-isolator-superconductor junction, such as an Al/AlOx/Al junction.

It can be seen that the enclosing portion 132 of the conductive element 130 surrounds the qubit loop on three sides. In other words, the qubit loop is fully contained in the area defined by the extent of the enclosing portion 132 in the directions parallel and perpendicular to the symmetry line 190.

The first wiring section 120 is bisected by the symmetry line 190 into a first branch and a second branch. The first branch begins at the connection point between the second wiring section 140 and the first wiring section 120, and ends at one superconductor of the Josephson junction. The second branch begins at the connection point and ends at the other superconductor of the Josephson junction.

The first wiring section 120 comprises a wiring segment perpendicular to the symmetry line 190 (which is connected to the second wiring section 140), two wiring segments parallel to the symmetry line 190 (and, thus, to each other), and two wiring segments perpendicular to the symmetry line 190 and aligned with each other, each connected to the nonlinear element 110.

The first branch comprises a first higher-inductance portion with inductance *L_{q}*/2 + Δ. The first higher-inductance portion is made of granular aluminium wire with a thickness of 70 nm, a width of 200 nm and a sheet inductance of L_{□}=80±5 pH/□. The second branch comprises a second higher-inductance portion with inductance *L_{q}*/2 - Δ. The second higher-inductance portion is made of granular aluminium wire with a thickness of 70 nm, a width of 200 nm and a sheet inductance of L_{□}=80±5 pH/□. The rest of the first wiring section 120 is made of lower-inductance portions in aluminium-shunted grAl.

The length of the first higher-inductance portion is greater than the length of the second higher-inductance portion, so that the first branch has a first kinetic inductance higher than the second branch, wherein the difference is 2 Δ. A difference in length of about 2.6 µm translates into a difference in kinetic inductance of about 0.6 nH. In general, this ratio depends on the parameters of the used granular aluminium, such as oxidation and width.

The SQC further comprises the third wiring section 170 and the fourth wiring section 180, which connect the first wiring section 120 to the first capacitive element 150 and the second capacitive element 160, respectively. The connection point between the third wiring section 170 and the first wiring section 120 is hereinafter referred to as "second node", while the connection point between the fourth wiring section 180 and the first wiring section 120 is hereinafter referred to as "third node". The third wiring section 170 and the fourth wiring section 180 are symmetrically arranged on opposite sides of the symmetry line 190, wherein the distance between the third wiring section 170 and the first wiring section 180 is about 10 µm. The third wiring section 170 and the fourth wiring section 180 are identical to each other, so only the third wiring section 170 is described in the following. The third wiring section 170 is straight, has a length of about 40 µm and forms a right angle with the first wiring section 120. The third wiring section 170 is a lower-inductance portion made of aluminium-shunted grAl.

The SQC further comprises the first capacitive element 150 and the second capacitive element 160, which are symmetrically arranged on opposite sides of the symmetry line 190. Each capacitive element 150, 160 is a lower-inductance portion made of aluminium-shunted grAl. The first capacitive element 150 comprises a first stripe and a second stripe. The stripes have a length greater than their width, wherein the length is in the direction perpendicular to the symmetry line 190. The first stripe and the second stripe are parallel to each other and connected to each other by a transversal portion. The distance between the first stripe and the second stripe is about 25 µm.

The first stripe is connected to the third wiring section 170 and has a length of about 210 µm. The second stripe begins at a distance of about 80 µm from the symmetry line 190 and extends then away from the symmetry line for about 135 µm. The first stripe has a protrusion extending in the direction of the symmetry line 190 toward the conductive element 130. This protrusion is shaped so as to form a round edge with the rest of the stripe, wherein this round edge corresponds to the round edge of the terminal portion of the first arm. The distance between these rounds edges may be about 10 µm. The first capacitive element 150 (in particular the protrusion of the first stripe) forms a capacitor with the terminal portion of the first arm.

The second capacitive element 160 is identical to the first capacitive element 150 and is simply mirrored with respect to the symmetry line 190. Accordingly, the description of the first capacitive element 150 applies analogously to the second capacitive element 160, which comprises a first stripe with protrusion and second stripe, and which forms a capacitor with the terminal portion of the second arm. Furthermore, the first capacitive element 150 and the second capacitive element 160 (in particular, their first stripes) also form a capacitor that shunts the qubit loop. The first capacitive element 150 and the second capacitive element 160 are arranged such that their first stripes are aligned, and their second stripes are aligned, while the transversal portions are parallel to each other and to the symmetry line 190.

It is noted that, while for descriptive purposes the superconducting quantum circuit has been "split" into various separate components, all the components are connected to each other, directly or indirectly, i.e. via other components.

The coupler circuit 300 may also be implemented as the SQC shown in figure 11, however without the circular element 138. The fifth wiring section 136 would connect instead directly capacitively to the readout port 540 of enclosure 570.

## Claims

1. A method for indirectly coupling a first superconducting quantum circuit and a second superconducting quantum circuit, the method comprising:
- providing the first superconducting quantum circuit and the second superconducting quantum circuit such that the first superconducting quantum circuit and the second superconducting quantum circuit are electromagnetically isolated from each other;
- electromagnetically coupling a coupler circuit to the first superconducting quantum circuit and to the second superconducting quantum circuit, wherein the first superconducting quantum circuit and the second superconducting quantum circuit are coupled to the coupler circuit with equal strength;
- setting a resonance frequency of the first superconducting quantum circuit to a common frequency;
- setting a resonance frequency of the second superconducting quantum circuit to the common frequency;
- applying an oscillating signal that makes a resonance frequency of the coupler circuit cyclically change such that the resonance frequency of the coupler circuit is equal to the common frequency at a plurality of timepoints, wherein an amplitude, a length and a frequency of the oscillating signal are set such that a first qubit state of the first superconducting quantum circuit and a second qubit state of the second superconducting quantum circuit swap.

2. The method of claim 1, wherein providing the first superconducting quantum circuit and the second superconducting quantum circuit comprises providing the first superconducting quantum circuit in a first enclosure and the second superconducting quantum circuit in a second enclosure by:
- positioning the first superconducting quantum circuit and the second superconducting quantum circuit in a base component of a container;
- connecting a lid component of the container to the base component;
wherein the connected lid component and base component form the first enclosure and the second enclosure.

3. The method of claim 1 or 2, wherein the coupler circuit comprises:
a first coupling element,
a second coupling element, and
a coupler superconducting quantum circuit electrically connected to the first coupling element and electrically connected to the second coupling element.

4. The method of claim 2 or 3, wherein:
the first superconducting quantum circuit is electrically connected to a first coupling component, the first coupling component being located outside the first enclosure;
the second superconducting quantum circuit is electrically connected to a second coupling component, the second coupling component being located outside the second enclosure; and
electromagnetically coupling a coupler circuit to the first superconducting quantum circuit and to the second superconducting quantum circuit comprises coupling the coupler circuit to the first coupling component and to the second coupling component.

5. The method of claim 4, wherein electromagnetically coupling the coupler circuit comprises:
providing the coupler circuit in a coupler enclosure, wherein the coupler enclosure electromagnetically isolates the coupler circuit;
providing the first coupling component and the second coupling component in the coupler enclosure.

6. The method of any one of the preceding claims, wherein the common frequency is the half-flux frequency of the first superconducting quantum circuit.

7. The method of any one of the preceding claims, wherein the frequency *f* of the oscillating signal is set such that $f = \frac{ϵ}{n}$, *n* being an integer and *ε* being a difference between the common frequency and a resonance frequency at rest of the coupler circuit.

8. A system comprising:
- a first superconducting quantum circuit and a second superconducting quantum circuit, wherein the first superconducting quantum circuit and the second superconducting quantum circuit are electromagnetically isolated from each other; and
- a coupler circuit being electromagnetically coupled to the first superconducting quantum circuit and to the second superconducting quantum circuit, wherein the first superconducting quantum circuit and the second superconducting quantum circuit are coupled to the coupler circuit with equal strength;
wherein:
a resonance frequency of the first superconducting quantum circuit is set to a common frequency;
a resonance frequency of the second superconducting quantum circuit is set to the common frequency;
the system is configured such that a resonance frequency of the coupler circuit is tunable by an oscillating signal, the oscillating signal being configured to cyclically change the resonance frequency of the coupler circuit such that the resonance frequency of the coupler circuit is equal to the common frequency at a plurality of timepoints; and
an amplitude, a length and a frequency of the oscillating signal are set such that a first qubit state of the first superconducting quantum circuit and a second qubit state of the second superconducting quantum circuit are configured to swap.

9. The system of claim 8, further comprising:
- a base component of a container;
- a lid component of the container, which is configured to be connected to the base component;
wherein:
the connected lid component and base component form a first enclosure and a second enclosure; and
the first superconducting quantum circuit is provided in the first enclosure and the second superconducting quantum circuit is provided in the second enclosure.

10. The system of claim 8 or 9, wherein the coupler circuit comprises:
- a first coupling element,
- a second coupling element, and
- a coupler superconducting quantum circuit electrically connected to the first coupling element and electrically connected to the second coupling element.

11. The system of claim 9 or 10, wherein:
the first superconducting quantum circuit is electrically connected to a first coupling component, the first coupling component being located outside the first enclosure;
the second superconducting quantum circuit is electrically connected to a second coupling component, the second coupling component being located outside the second enclosure; and
the coupler circuit is electromagnetically coupled to the first coupling component and to the second coupling component.

12. The system of claim 11, wherein:
the coupler circuit is in a coupler enclosure, wherein the coupler enclosure is configured to electromagnetically isolate the coupler circuit; and
the first coupling component and the second coupling component are in the coupler enclosure.

13. The system of any one of claims 8 to 12, wherein the common frequency is the half-flux frequency of the first superconducting quantum circuit.

14. The system of any one of claims 8 to 13, wherein each of the first and second superconducting quantum circuits comprises:
- a nonlinear element;
- a first wiring section having a first end and a second end, wherein both the first end and the second end are connected to the nonlinear element;
- a conductive element;
- a second wiring section connecting the conductive element to the first wiring section;
- a first capacitive element and a second capacitive element identical to the first capacitive element;
- a third wiring section connecting the first capacitive element to the first wiring section; and
- a fourth wiring section connecting the second capacitive element to the first wiring section;
wherein:
the first capacitive element and the second capacitive element are arranged such that a symmetry line equidistant from the first capacitive element and the second capacitive element intersects the nonlinear element;
the first wiring section is bisected into a first branch and a second branch by the symmetry line, the first branch being geometrically identical to the second branch;
the first branch has a first kinetic inductance, the second branch has a second kinetic inductance, and the first kinetic inductance is different from the second kinetic inductance;
the second wiring section substantially lies on the symmetry line and does not contact the nonlinear element; and
the conductive element is bisected by the symmetry line.

15. The system of any one of claims 8 to 14, further comprising:
- a first control circuit, and
- a second control circuit;
wherein the first control circuit is configured to couple the first superconducting quantum circuit to a first readout port and configured to couple the first superconducting quantum circuit to a first flux control port;
wherein the second control circuit is configured to couple the second superconducting quantum circuit to a second readout port and configured to couple the second superconducting quantum circuit to a second flux control port.

## Amended claims

### Amended claims in accordance with Rule 137(2) EPC.

1. A method for indirectly coupling a first superconducting quantum circuit (100) and a second superconducting quantum circuit (200), the method comprising:
- providing (1010) the first superconducting quantum circuit (100) and the second superconducting quantum circuit (200) such that the first superconducting quantum circuit (100) and the second superconducting quantum circuit (200) are electromagnetically isolated from each other;
- electromagnetically coupling (1020) a coupler circuit (300) to the first superconducting quantum circuit (100) and to the second superconducting quantum circuit (200), wherein the first superconducting quantum circuit (100) and the second superconducting quantum circuit (200) are coupled to the coupler circuit (300) with equal strength;
- setting (1030) a resonance frequency of the first superconducting quantum circuit (100) to a common frequency;
- setting (1030) a resonance frequency of the second superconducting quantum circuit (200) to the common frequency;
- applying (1040) an oscillating signal that makes a resonance frequency of the coupler circuit (300) cyclically change such that the resonance frequency of the coupler circuit (300) is equal to the common frequency at a plurality of timepoints, wherein an amplitude, a length and a frequency of the oscillating signal are set such that constructive Landau-Zener-Stückelberg-Majorana interference occurs so that a first qubit state of the first superconducting quantum circuit (100) and a second qubit state of the second superconducting quantum circuit (200) swap after a number of cycles of the resonance frequency of the coupler circuit, wherein the number of cycles is equal to half the number of the plurality of timepoints;
wherein providing the first superconducting quantum circuit (100) and the second superconducting quantum circuit (200) comprises providing the first superconducting quantum circuit (100) in a first enclosure (550) and the second superconducting quantum circuit (200) in a second enclosure (560) by:
- positioning the first superconducting quantum circuit (100) and the second superconducting quantum circuit (200) in a base component (520) of a container (500);
- connecting a lid component (510) of the container (500) to the base component (520);
wherein the connected lid component (510) and base component (520) form the first enclosure (550) and the second enclosure (560).

2. The method of claim 1, wherein the coupler circuit (300) comprises:
a first coupling element,
a second coupling element, and
a coupler superconducting quantum circuit electrically connected to the first coupling element and electrically connected to the second coupling element.

3. The method of claim 1 or 2, wherein:
the first superconducting quantum circuit (100) is electrically connected to a first coupling component, the first coupling component being located outside the first enclosure (550);
the second superconducting quantum circuit (200) is electrically connected to a second coupling component, the second coupling component being located outside the second enclosure (560); and
electromagnetically coupling a coupler circuit (300) to the first superconducting quantum circuit (100) and to the second superconducting quantum circuit (200) comprises coupling the coupler circuit (300) to the first coupling component and to the second coupling component.

4. The method of claim 3, wherein electromagnetically coupling the coupler circuit (300) comprises:
providing the coupler circuit (300) in a coupler enclosure, wherein the coupler enclosure electromagnetically isolates the coupler circuit (300);
providing the first coupling component and the second coupling component in the coupler enclosure.

5. The method of any one of the preceding claims, wherein the common frequency is the half-flux frequency of the first superconducting quantum circuit (100).

6. The method of any one of the preceding claims, wherein the frequency *f* of the oscillating signal is set such that $f = \frac{ϵ}{n}$, *n* being an integer and *ε* being a difference between the common frequency and a resonance frequency at rest of the coupler circuit (300).

7. A system comprising:
- a first superconducting quantum circuit (100) and a second superconducting quantum circuit (200), wherein the first superconducting quantum circuit (100) and the second superconducting quantum circuit (200) are electromagnetically isolated from each other; and
- a coupler circuit (300) being electromagnetically coupled to the first superconducting quantum circuit (100) and to the second superconducting quantum circuit (200), wherein the first superconducting quantum circuit (100) and the second superconducting quantum circuit (200) are coupled to the coupler circuit (300) with equal strength;
wherein:
a resonance frequency of the first superconducting quantum circuit (100) is set to a common frequency;
a resonance frequency of the second superconducting quantum circuit (200) is set to the common frequency;
the system is configured such that a resonance frequency of the coupler circuit (300) is tunable by an oscillating signal, the oscillating signal being configured to cyclically change the resonance frequency of the coupler circuit (300) such that the resonance frequency of the coupler circuit (300) is equal to the common frequency at a plurality of timepoints; and
an amplitude, a length and a frequency of the oscillating signal are set such that constructive Landau-Zener-Stückelberg-Majorana interference occurs so that a first qubit state of the first superconducting quantum circuit (100) and a second qubit state of the second superconducting quantum circuit (200) are configured to swap after a number of cycles of the resonance frequency of the coupler circuit, wherein the number of cycles is equal to half the number of the plurality of timepoints;
the system further comprising:
- a base component (520) of a container (500);
- a lid component (510) of the container (500), which is configured to be connected to the base component (520);
wherein:
the connected lid component (510) and base component (520) form a first enclosure (550) and a second enclosure (560); and
the first superconducting quantum circuit (100) is provided in the first enclosure (550) and the second superconducting quantum circuit (200) is provided in the second enclosure (560).

8. The system of claim 7, wherein the coupler circuit (300) comprises:
- a first coupling element,
- a second coupling element, and
- a coupler superconducting quantum circuit electrically connected to the first coupling element and electrically connected to the second coupling element.

9. The system of claim 7 or 8, wherein:
the first superconducting quantum circuit (100) is electrically connected to a first coupling component, the first coupling component being located outside the first enclosure (550);
the second superconducting quantum circuit (200) is electrically connected to a second coupling component, the second coupling component being located outside the second enclosure (560); and
the coupler circuit (300) is electromagnetically coupled to the first coupling component and to the second coupling component.

10. The system of claim 9, wherein:
the coupler circuit (300) is in a coupler enclosure, wherein the coupler enclosure is configured to electromagnetically isolate the coupler circuit (300); and
the first coupling component and the second coupling component are in the coupler enclosure.

11. The system of any one of claims 7 to 10, wherein the common frequency is the half-flux frequency of the first superconducting quantum circuit (100).

12. The system of any one of claims 7 to 11, wherein each of the first and second superconducting quantum circuits (100, 200) comprises:
- a nonlinear element;
- a first wiring section having a first end and a second end, wherein both the first end and the second end are connected to the nonlinear element;
- a conductive element;
- a second wiring section connecting the conductive element to the first wiring section;
- a first capacitive element and a second capacitive element identical to the first capacitive element;
- a third wiring section connecting the first capacitive element to the first wiring section; and
- a fourth wiring section connecting the second capacitive element to the first wiring section;
wherein:
the first capacitive element and the second capacitive element are arranged such that a symmetry line equidistant from the first capacitive element and the second capacitive element intersects the nonlinear element;
the first wiring section is bisected into a first branch and a second branch by the symmetry line, the first branch being geometrically identical to the second branch;
the first branch has a first kinetic inductance, the second branch has a second kinetic inductance, and the first kinetic inductance is different from the second kinetic inductance;
the second wiring section substantially lies on the symmetry line and does not contact the nonlinear element; and
the conductive element is bisected by the symmetry line.

13. The system of any one of claims 7 to 12, further comprising:
- a first control circuit, and
- a second control circuit;
wherein the first control circuit is configured to couple the first superconducting quantum circuit (100) to a first readout port and configured to couple the first superconducting quantum circuit (100) to a first flux control port;
wherein the second control circuit is configured to couple the second superconducting quantum circuit (200) to a second readout port and configured to couple the second superconducting quantum circuit (200) to a second flux control port.
